# EUROPEAN PATENT SPECIFICATION

(11) **EP 2 174 839 B1**
(45) Date of publication and mention of the grant of the patent: **07.11.2012**
(21) Application number: 09172725.5
(22) Date of filing: 09.10.2009
(51) Int. Cl.: B60R 21/06, B60R 5/04

(54) **Retaining system for a separation element between a passenger compartment and a cargo compartment of a vehicle**
Haltesystem für ein Trennelement zwischen dem Insassenraum und dem Laderaum eines Fahrzeugs
Système de rétention pour élément de séparation entre le compartiment passager et le compartiment des bagages d'un véhicule

(30) Priority: 10.10.2008 IT TO20080746
(43) Date of publication of application: 14.04.2010
(73) Proprietor: Fibro S.p.A., 10040 Cumiana (IT)
(72) Inventor: Signoretto, Carlo Teresio, 10129, Torino (IT)
(74) Representative: Jorio, Paolo

(56) References cited:
- EP-A- 1 886 874
- EP-A- 1 889 755
- DE-U1- 9 100 692

## Description

The present invention relates to a retaining system for a separation element between a passenger compartment and a cargo compartment of a vehicle, such as a safety net or a cargo cover.

EP0649778B1 discloses the placing of a separation element between the passenger compartment and the luggage compartment of a vehicle comprising a safety net having two edges parallel to each other, each provided with fixing means to connect the net to the vehicle; in particular, one of the edges of the safety net is provided with a bar-like fixing arrangement having at least at one of its ends, an elongated cavity with a tubular insert arranged inside the cavity and fixed therein and a retaining element provided with a shank that fits displaceably inside the insert and one end of which projects out of the bar-like fixing arrangement and bears anchoring means (mushroom head) for anchoring to pockets mounted in the vehicle; a spring element acts between the insert and the retaining element, by respect of which it is pre-tensioned in such a manner to keep the retaining member in an end of stroke position with regard to the insert.

Although satisfactory, the fixing arrangement described may have the drawback of being subject to the retaining member occasionally sticking in the insert, due to its mating length with the insert being relatively short in relation to the length of the bar-like fixing arrangement, which must be the same as substantially the entire internal width of the vehicle. This drawback is only partly overcome by providing a sliding retaining element with a relative insert and relative spring on both of the opposite ends of the bar-like fixing arrangement, which, however, almost doubles the cost of the device.

EP-A-1889755, filed by this same applicant, overcomes the problem brilliantly with a retaining system for a separation element wherein a first and a second telescopic tubular element are coupled to one another and connected to first and second mutually cooperating guide means having elastic means inserted there between so as to push the second tubular element out of the first; at the opposite free ends, the two tubular elements are integrally provided with shank retaining means that may be secured during use to anchoring means mounted on the vehicle bodywork; the assembly is slidingly inserted in a tubular pocket fixed integrally to the separation element, so that a single spring is used and the sliding connection between the two tubular elements is situated substantially along the centreline of the retaining system and in any case in the tubular pocket. However, this system has the drawback of requiring the system to be housed slidingly in the pocket and, moreover, the difference in diameter in the two tubular elements housed in the pocket can, in use, cause unattractive creasing of said pocket.

Recently, however, normal crash tests demand retaining systems with significantly higher mechanical strength characteristics, also in consideration of the fact that the separation element retained by said system is not merely an aesthetic element, but must above all prevent any luggage from being thrown forward into the passenger compartment in the event of a vehicle collision.

Although the system described in EP-A-1889755 has very good mechanical strength, exceeding that of the system according to EP0649778B1, it would be preferable to provide a retaining system having even better mechanical strength characteristics in the event of a collision.

The purpose of the present invention is thus, on the one hand, to overcome the drawbacks described above and, on the other, to increase the safety of the passengers of a vehicle, in particular of an estate car in which the luggage compartment communicates directly with the passenger compartment, by providing a retaining system for the separation element between a passenger compartment and a cargo compartment which not only has limited overall dimensions and production costs, is reliable and quiet to operate, but which can also be fixed, if necessary, integrally to the tubular pocket and guarantees good mechanical strength in the event of a collision.

According to the invention there is provided a retaining system for a separation element between a passenger compartment and a cargo compartment of a vehicle, e.g. a safety net or a removable cargo cover, as set forth in claim 1.

In particular, the retaining system according to the invention comprises an innovative bar-like fixing arrangement associated with a tubular pocket integrally fixed to a first side of the separation element fixable in use to the body of the vehicle by means of the bar-like fixing arrangement.

The bar-like fixing arrangement comprises, in combination: a first and a second substantially rigid tube; a substantially rigid metal rod integrally and axially and overhangingly carried by a first end of the second tube, facing the first tube in use, a free end of the rod being slidingly and telescopically accommodated within a first end of the first tube immediately adjacent to, but spaced apart from, the first end of the second tube, within a bushing, which is accommodated axially and angularly locked at the first end of the first tube; elastic means inserted between the first ends of the first and second tubes, to keep the latter spaced apart; a third tube slidingly accommodating the first and the second tubes; and shank retaining means of the type which may be secured in use to anchoring means carried by the body of the vehicle, said shank retaining means being integrally carried by second ends of the first and second tubes so as to axially and overhangingly protrude from respective opposite ends of the third tube.

The invention thus also relates to said improved bar-like fixing arrangement, according to claim 11.

In this way a springing system is achieved, in which the rod, the bushing and the three tubes are of an appropriate length, and which is positioned substantially along the centreline of the bar-like fixing arrangement and, above all, can be relatively long despite a relatively short spring stroke, determined by the axial space or clearance between the first ends of the first and second tube due to the length chosen for the metal rod.

This enables the mechanical stress to be balanced and distributed in the best possible way, to avoid jamming even though only using a single springing system (instead of two) and means that the radial compression load exerted in use by the metal rod against the seat in which it slides in the bushing can be kept relatively low; moreover, thanks to the concentric and telescopic arrangement of the rod in the first tube, a highly rigid structure is created along the centreline, i.e. in the area subject to the greatest stress in the event of a collision.

Lastly, thanks to the presence of an external tubular element, namely the third tube, which, although not a load-bearing structure, also contributes to the overall rigidity of the bar-like arrangement, the coupling member between the separation element (net or cargo cover) and the tubular pocket is completely smooth and has a uniform diameter, so that it does not cause any creasing, in use, of said pocket. This can, if necessary, be fixed integrally (e.g. glued) to the external tubular element, thus preventing the risk of the bar-like arrangement of the retaining system from coming out of the pocket when the separation element is removed from the vehicle (for example when loading a large item of luggage) and accidentally falling, for example on the user's foot.

Further purposes and advantages of the present invention will become clear from the following description of a non-limiting embodiment thereof, provided merely by way of example and with reference to the figures in the accompanying drawings, in which:
- figure 1 is a schematic elevation view of a separation element between the passenger compartment and the cargo compartment of a vehicle provided with a retaining system according to the invention, illustrated partly as an external view and partly as a schematic longitudinal cross-section;
- figure 2 is a perspective three-quarter view from above and partial vertical section view, on an enlarged scale, of the retaining system according to the invention; and
- figure 3 is an exploded and enlarged scale view of a construction detail of the centreline of the retaining system illustrated in figure 2.

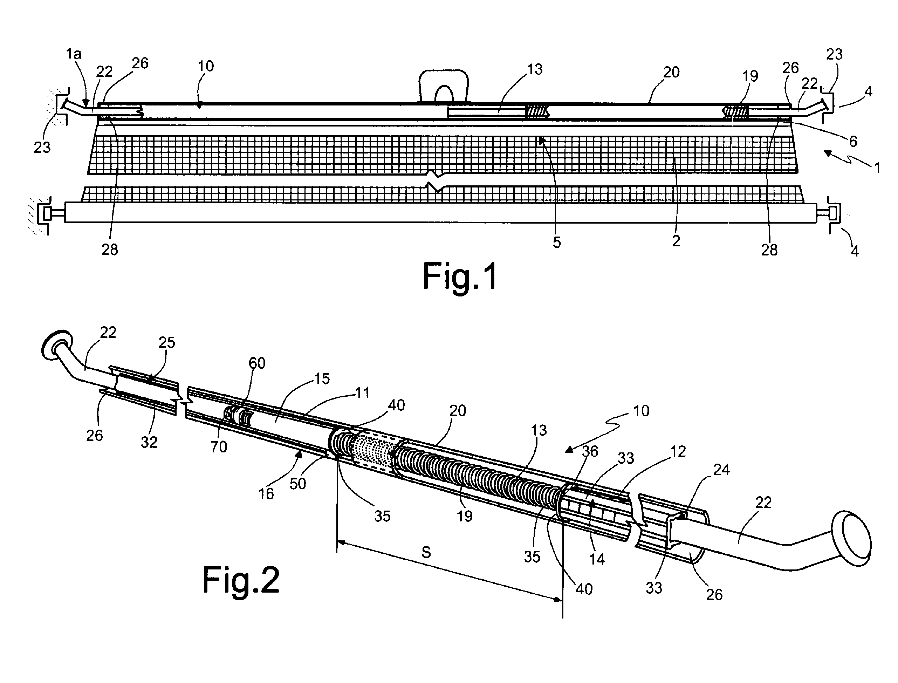

With reference to figures 1 to 3, designated as a whole by number 1 is a retaining system for a separation element 2 between a passenger compartment and a cargo compartment, which are known and are not illustrated for the sake of simplicity, of a vehicle, of which only a portion of a body 4 is schematically illustrated (figure 1); in the example illustrated here, the separation element 2 is a safety net, for example of the roll-up blind type, that can be positioned taut during use between the rear seat of the vehicle and the ceiling or roof of the passenger compartment; however, the retaining system 1 which will be described could just as easily be mounted on another type of separation element, such as a removable parcel shelf.

The separation element 2 has at least a first side 5 that can be fixed to the body 4 of the vehicle by means of first connection means 1a forming part, according to the invention, of the retaining system 1 and comprising a tubular pocket 6 fixed integrally to the side 5 of the separation element 2 along the entire length thereof, and a bar-like fastening arrangement 10 associated with the tubular pocket 6, in particular fitted axially passing through within said tubular pocket 6.

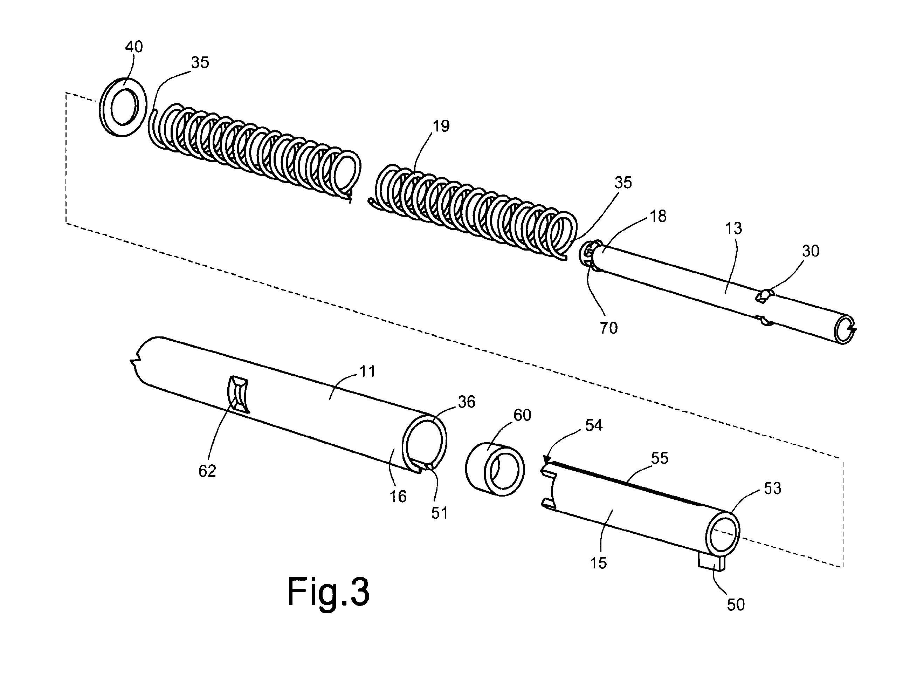

According to the main aspect of the invention, the bar-like fixing arrangement 10 comprises, in combination (figures 2 and 3): a first substantially rigid tube 11 and a second substantially rigid tube 12; a substantially rigid metal rod 13 integrally and axially and overhangingly carried by a first end 14 of the second tube 12, facing the first tube 11 in use, and a bushing 15 axially accommodated and angularly locked in a first end 16 of the first tube 11.

A free end 18 of the rod 13 is slidingly and telescopically accommodated within the end 16 of the first tube 11 immediately adjacent to, but spaced apart from, the first end 14 of the second tube 12; elastic means 19 are also inserted between the first ends 16 and 14 of the first and second tube 11 and 12, within an axial space or clearance S between said first and second tube 11 and 12, to keep the ends 14 and 16 away from one another.

Lastly, the bar-like arrangement 10 also comprises, according to an important aspect of the invention, a third tube 20, slidingly accommodating the tubes 11 and 12, and shank retaining means 22 of the type which may be secured in use to anchoring means 23 (which are known in the prior art) carried by the body 4 of the vehicle.

In particular the shank retaining means 22 are integrally carried by second ends 24, 25 of the tubes 12 and 11, respectively so as to axially and overhangingly protrude from respective opposite ends 26 of the tube 20, which is radially more external and is coupled in use directly to the tubular pocket 6, so that they can in turn be coupled in use to the anchoring means 23, in a known manner, also overhangingly protruding from the opposite, open ends of the tubular pockets 6, which arrive substantially in proximity to the ends 26 of the tube 20.

In particular (figure 1) the opposite ends 26 of the third tube 20 are provided with guiding bushings 28 slidingly engaged by the shank retaining means 22 passing therethrough. Moreover, the rod 13 and the shank retaining means 22 are integrally, angularly and axially fixed to the tubes 12 and 11 by means of crushed portions 30 thereof (of which, for the sake of simplicity, only the portion 30 of the rod 13 is illustrated, figure 3, those of the shank retaining means 22 being substantially identical), within which respective crushed portions 32,33 of the first tube 11 and second tube 12 have been plastically deformed.

The elastic means 19 consist of a helical spring fitted on said rod 13, opposite ends 35 of the helical spring laying in abutment against respective frontal annular edges 36 of the first ends 16 and 14 of the first tube 11 and second tube 12. In particular, an abutment washer 40 is interposed between the spring 19 and at least one of the ends 16,14, in the example that is illustrated two washers 40, each interposed between an end 35 and the corresponding end 16 or 14 of the tubes 11 and 12; the abutting washers 40 are made of a synthetic plastic material and in the example are interposed between the elastic means 19 and the frontal annular edges 36 of the ends 16,14 of the tubes 11,12, so as not to affect the bushing 15.

On the other hand, the length of the rod 13 is such that it always axially and overhangingly protrudes from the bushing 15 within the tube 11 and towards the second end 25 thereof, both when the spring 19 is fully extended (apart from a slight preload with which it is preferably provided) with the maximum clearance S, and when in use, for example to couple the means 22 and 23, with the clearance S reduced to a minimum and the spring 19 axially compressed.
The bushing 15 is also made of synthetic plastic material and has, in particular, a radial fin 50 slidingly inserted into an axial slit 51 of the tube 11, cut open on the end 16. The radial fin 50 is overhangingly provided on a first end 53 of the bushing 15, while a second end 54 thereof, opposite to the end 53 and, in use, facing the second end 25 of the first tube 11, is substantially fork-shaped and is provided with a longitudinal slit 55, cut in the end 54 and which extends up to approximately the end of the radial fin 50, but on the opposite side thereof.

The end 54 of the bushing 15 is coupled, according to a further aspect of the invention, to a stop bushing 60 made of steel, inserted into the first tube 11 and locked therein by means of respective radial crushed portions 62 which are obtained on the first tube 11 by plastic deformation after inserting the stop bushing 60.

The free end 18 of the rod 13 is provided towards the second end 25 of the first tube 11, and is also crushed so as to form an abutting head 70 for the stop bushing 60, which prevents the spring 19 from pulling the rod 13 off the bushing 15 and the tube 11.

The bar-like arrangement 10 is thus perfectly smooth on the outside, it being delimited by the continuous tube 20, and has a pair of retaining elements or means 22 which protrude from the opposite ends 26 guided by the bushings 28 and which both can stretch axially sliding in the bushings 28 and within the tube 20, even with a single springing system obtained in a central position, completely concealed inside the tube 20 (and thus, in use, within the tubular pocket 6). Moreover, the coupling of highly rigid concentric structural elements, such as the rod 13, the stop bushing 60 and the tube 11, and the presence of the crushed portion 33 on the tube 12, give the bar-like arrangement 10 considerably high structural bending strength, guaranteeing excellent performance in retaining the separation element 2 in the event of a vehicle collision.

## Claims

1. A retaining system (1) for a separation element (2) between a passenger compartment and a cargo compartment of a vehicle, e.g. a safety net or a removable cargo cover, wherein the separation element has at least one first side (5) which may be fixed to a body of the vehicle, of the type comprising a bar-like fixing arrangement (10) associated to a tubular pocket (6) integrally fixed to said first side of the separation element; wherein the bar-like fixing arrangement (10) comprises, in combination: a first (11) and a second (12) substantially rigid tubes; a substantially rigid metal rod (13) integrally and axially and overhangingly carried by a first end (14) of the second tube (12), facing the first tube (11) in use, a free end (18) of the rod **characterised in that** is slidingly and telescopically accommodated within a first end (16) of the first tube (11) immediately adjacent to, but spaced apart from, the first end (14) of the second tube (12), within a bushing (15) accommodated axially and angularly locked at the first end (16) of the first tube; elastic means (19) inserted between the first ends (16,14) of the first (11) and second (12) tubes, to keep the same away from each other; a third tube (20) slidingly accommodating the first and second tubes (11,12); and shank retaining means (22) of the type which may be secured in use to anchoring means (23) carried by the body (4) of the vehicle, said shank retaining means (22) being integrally carried by second ends (25,24) of the first (11) and second (12) tubes so as to axially and overhangingly protrude from respective opposite ends (26) of the third tube (20).

2. A retaining system according to claim 1, **characterized in that** said opposite ends (26) of the third tube (20) are provided with guiding bushings (28) slidingly engaged by said shank retaining means (22) which pass there through.

3. A retaining system according to claim 1 or 2, **characterized in that** said rod (13) and said shank retaining means (22) are integrally, angularly and axially fixed to said first and second tubes (11,12) by means of first crushed portions (30) thereof, within which second crushed portions (32,33) of the first and second tubes (11,12) have been plastically deformed.

4. A retaining system according to one of the preceding claims, **characterized in that** said elastic means consist in a helical spring (19) fitted on said rod (13) and opposite ends (35) of which lay in abutment against respective frontal annular edges (36) of said first ends (16,14) of said first and second tubes (11,12).

5. A retaining system according to one of the preceding claims, **characterized in that** said rod (13) has a length such as to axially and overhangingly protrude from said bushing (15) within said first tube (11) and towards the second end (25) of the same.

6. A retaining system according to one of the preceding claims, **characterized in that** an abutting washer (40) is interposed between said elastic means (19) and at least one of said first ends (16,14) of the first and second tubes (11,12).

7. A retaining system according to claim 6, **characterized in that** said abutting washer (40) is made of a synthetic plastic material and is interposed between the elastic means (19) and a front annular edge (36) of said first ends (16,14) of the first and/or second tubes (11,12).

8. A retaining system according to one of the preceding claims, **characterized in that** said bushing (15) is made of a synthetic plastic material and has a radial fin (50) slidingly inserted into an axial slit (51) of the first tube (11).

9. A retaining system according to claim 8, **characterized in that** said bushing (15) has a first end (53) provided with said radial fin and a second end (54), opposite to the first end and facing the second end (25) of the first tube, substantially fork-shaped and provided with a longitudinal slit (55), which extends to approximately the end of said radial fin (50), but on the opposite side of the same; the second end (54) of the bushing being coupled with a stop bushing (60) made of steel, inserted into the first tube and locked therein by means of respective radial crushed portions (62) which have been obtained on the first tube (11) by plastic deformation.

10. A retaining system according to claim 9, **characterized in that** said rod (13) has a crushed free end (18) towards the second end of the first tube so as to form an abutting head (70) for said steel stop bushing.

11. A bar-like fixing arrangement (10) for a retaining system (1), according to one of the preceding claims.

## Patentansprüche

1. Haltesystem (1) für ein Trennelement (2) zwischen dem Insassenraum und dem Laderaum eines Fahrzeugs, beispielsweise ein Sicherheitsnetz oder eine herausnehmbare Ladeabdeckung, wobei das Trennelement mindestens eine erste Seite (5) aufweist, die an dem Körper des Fahrzeugs befestigt werden kann, und zwar von dem Typ mit einer stangenartigen Befestigungsanordnung (10), die einer rohrförmigen Tasche (6) zugeordnet werden kann, welche integral an der ersten Seite des Trennelementes befestigt ist,
wobei die stangenartige Befestigungsanordnung (10) in Kombination folgendes aufweist: ein erstes Rohr (11) und ein zweites Rohr (12), die im wesentlichen starre Rohre sind; eine im wesentlichen starre Metallstange (13), die integral und axial in überhängender Weise von einem ersten Ende (14) des zweiten Rohres (12) getragen ist, welches dem ersten Rohr (11) im Gebrauch gegenüberliegt,
**dadurch gekennzeichnet,**
**dass** ein freies Ende (18) der Stange gleitend und teleskopierbar innerhalb eines ersten Endes (16) des ersten Rohres (11) untergebracht ist, und zwar unmittelbar angrenzend an, aber beabstandet von dem ersten Ende (14) des zweiten Rohres (12), wobei eine Buchse (15) axial an dem ersten Ende (16) des ersten Rohres angebracht und winkelmäßig an diesem verriegelt ist; dass eine elastische Einrichtung (19) zwischen den ersten Enden (16, 14) des ersten Rohres (11) und des zweiten Rohres (12) eingesetzt ist, um diese im Abstand zueinander zu halten;
**dass** ein drittes Rohr (20) gleitend die ersten und zweiten Rohre (11, 12) aufnimmt;
und **dass** eine Schafthalteeinrichtung (22) von dem Typ vorgesehen ist, der im Gebrauch an einer Verankerungseinrichtung (23) befestigt werden kann, die vom Körper (4) des Fahrzeugs getragen ist, wobei die Schafthalteeinrichtung (22) integral von zweiten Enden (25, 24) der ersten und zweiten Rohre (11, 12) getragen ist, um axial und überhängend von den jeweiligen gegenüberliegenden Enden (26) des dritten Rohres (20) vorzustehen.

2. Haltesystem nach Anspruch 1,
**dadurch gekennzeichnet,**
**dass** die gegenüberliegenden Enden (26) des dritten Rohres (20) mit Führungsbuchen (28) versehen sind, die in gleitendem Eingriff mit den Schafthalteeinrichtungen (22) stehen, welche durch sie hindurchgehen.

3. Haltesystem nach Anspruch 1 oder 2,
**dadurch gekennzeichnet,**
**dass** die Stange (13) und die Schafthalteeinrichtung (22) integral, winkelmäßig und axial an den ersten und zweiten Rohren (11, 12) befestigt sind, und zwar mittels erster eingedrückter Bereiche (30), innerhalb welcher zweite eingedrückte Bereiche (32, 33) der ersten und zweiten Rohre (11, 12) plastisch verformt worden sind.

4. Haltesystem nach einem der vorhergehenden Ansprüche,
**dadurch gekennzeichnet,**
**dass** die elastische Einrichtung aus einer Wendelfeder (19) besteht, die an der Stange (13) angebracht ist, und von der gegenüberliegende Enden (35) gegen jeweilige ringförmige Vorderkanten (36) der ersten Enden (16, 14) der ersten und zweiten Rohre (11, 12) anliegen.

5. Haltesystem nach einem der vorhergehenden Ansprüche,
**dadurch gekennzeichnet,**
**dass** die Stange (13) eine derartige Länge besitzt, dass sie axial und überhängend von der Buchse (15) innerhalb des ersten Rohres (11) und zu dem zweiten Ende (25) davon vorsteht.

6. Haltesystem nach einem der vorhergehenden Ansprüche,
**dadurch gekennzeichnet,**
**dass** eine Beilagscheibe (40) zwischen der elastischen Einrichtung (19) und mindestens einem der ersten Enden (16, 14) der ersten und zweiten Rohre (11, 12) dazwischengesetzt ist.

7. Haltesystem nach Anspruch 6,
**dadurch gekennzeichnet,**
**dass** die Beilagscheibe (40) aus einem synthetischen plastischen Material besteht und zwischen der elastischen Einrichtung (19) und einer ringförmigen Vorderkante (36) der ersten Enden (16, 14) des ersten und/oder des zweiten Rohres (11, 12) dazwischengesetzt ist.

8. Haltesystem nach einem der vorhergehenden Ansprüche,
**dadurch gekennzeichnet,**
**dass** die Buchse (15) aus einem synthetischen plastischen Material besteht und eine radiale Rippe (50) aufweist, die gleitend in einen axialen Schlitz (51) des ersten Rohres (11) eingesetzt ist.

9. Haltesystem nach Anspruch 8,
**dadurch gekennzeichnet,**
**dass** die Buchse (15) ein erstes Ende (53), das mit der radialen Rippe versehen ist, und ein zweites Ende (54) aufweist, das dem ersten Ende entgegengesetzt ist und dem zweiten Ende (25) des ersten Rohres gegenüberliegt, wobei es im wesentlichen gabelförmig ausgebildet und mit einem Längsschlitz (55) versehen ist, der sich ungefähr bis zu dem Ende der radialen Rippe (50) erstreckt, jedoch auf der gegenüberliegenden Seite davon;
und **dass** das zweite Ende (54) der Buchse mit einer Anschlagbuchse (60) aus Stahl gekoppelt ist, die in das erste Rohr eingesetzt und darin verriegelt ist mittels jeweiliger radial eingedrückter Bereiche (62), die an dem ersten Rohr (11) durch plastische Verformung erhalten worden sind.

10. Haltesystem nach Anspruch 9,
**dadurch gekennzeichnet,**
**dass** die Stange (13) ein eingedrücktes freies Ende (18) zu dem zweiten Ende des ersten Rohres hin aufweist, um einen Anschlagkopf (70) für die Anschlagbuchse aus Stahl zu bilden.

11. Stangenförmige Befestigungsanordnung (10) für ein Haltesystem (1) nach einem der vorhergehenden Ansprüche.

## Revendications

1. Système de retenue (1) pour un élément de séparation (2) entre un compartiment passager et un compartiment cargaison d'un véhicule, par exemple un filet de sécurité ou un couvre-bagages amovible, dans lequel l'élément de séparation comporte au moins un premier côté (5) qui peut être fixé à une carrosserie du véhicule, du type comprenant un agencement de fixation de type barre (10) associé à une poche tubulaire (6) fixée solidairement audit premier côté de l'élément de séparation ; dans lequel l'agencement de fixation de type barre (10) comprend, en combinaison :
un premier (11) et un deuxième (12) tube sensiblement rigide ; une tige métallique sensiblement rigide (13) porté de façon solidaire axiale et surplombante par une première extrémité (14) du deuxième tube (12), faisant face au premier tube (11) en utilisation, caractérisé en qu'une extrémité libre (18) de la tige est logée de façon coulissante et télescopique dans une première extrémité (16) du premier tube (11) immédiatement adjacente à, mais espacée de la première extrémité (14) du deuxième tube (12), dans un manchon (15) logé axialement et verrouillé angulairement au niveau de la première extrémité (16) du premier tube ; un moyen élastique (19) inséré entre les premières extrémités (16, 14) des premier (11) et deuxième (12) tubes, afin de maintenir ces derniers à distance l'un de l'autre ;
un troisième tube (20) logeant de façon coulissante les premier et deuxième tubes (11, 12) ; et un moyen de retenue de jambe (22) du type qui peut être assujetti en utilisation à un moyen d'ancrage (23) porté par la carrosserie (4) du véhicule, ledit moyen de retenue de jambe (22) étant porté de façon solidaire par des secondes extrémités (25, 24) des premier (11) et deuxième (12) tubes de façon à faire saillie de manière axiale et surplombante à partir des extrémités opposées respectives (26) du troisième tube (20).

2. Système de retenue selon la revendication 1, **caractérisé en ce que** lesdites extrémités opposées (26) du troisième tube (20) sont pourvues de manchons de guidage (28) en coopération coulissante avec ledit moyen de retenue de jambe (22) qui passe à travers.

3. Système de retenue selon la revendication 1 ou 2, **caractérisé en ce que** ladite tige (13) et ledit moyen de retenue de jambe (22) sont fixés de façon solidaire, angulaire et axiale auxdits premier et deuxième tubes (11, 12) au moyen de premières portions écrasées (30) de ceux-ci, à l'intérieur desquelles des secondes portions écrasées (32, 33) des premier et deuxième tubes (11, 12) ont été déformées plastiquement.

4. Système de retenue selon l'une des revendications précédentes, **caractérisé en ce que** ledit moyen élastique est constitué d'un ressort hélicoïdal (19) installé sur ladite tige (13) et dont des extrémités opposées (35) sont en butée contre des bords annulaires frontaux (36) respectifs desdites premières extrémités (16, 14) desdits premier et deuxième tubes (11, 12).

5. Système de retenue selon l'une des revendications précédentes, **caractérisé en ce que** ladite tige (13) a une longueur de façon à faire saillie de façon axiale et surplombante depuis ledit manchon (15) à l'intérieur dudit premier tube (11) et vers la seconde extrémité (25) de celui-ci.

6. Système de retenue selon l'une des revendications précédentes, **caractérisé en ce qu'**une rondelle de butée (40) est interposée entre ledit moyen élastique (19) et au moins une desdites premières extrémités (16, 14) des premier et deuxième tubes (11, 12).

7. Système de retenue selon la revendication 6, **caractérisé en ce que** ladite rondelle de butée (40) est en matière plastique synthétique et est interposée entre le moyen élastique (19) et un bord annulaire frontal (36) desdites premières extrémités (16, 14) des premier et/ou deuxième tubes (11, 12).

8. Système de retenue selon l'une des revendications précédentes, **caractérisé en ce que** ledit manchon (15) est en matière plastique synthétique et a une ailette radiale (50) insérée de manière coulissante dans une fente axiale (51) du premier tube (11).

9. Système de retenue selon la revendication 8, **caractérisé en ce que** ledit manchon (15) comporte une première extrémité (53) pourvue de ladite ailette radiale et une seconde extrémité (54), opposée à la première extrémité et faisant face à la seconde extrémité (25) du premier tube, sensiblement en forme de fourche et pourvue d'une fente longitudinale (55), qui s'étend jusqu'approximativement l'extrémité de ladite ailette radiale (50), mais sur le côté opposé de celle-ci ; la seconde extrémité (54) du manchon étant couplée avec un manchon d'arrêt (60) en acier, inséré dans le premier tube et verrouillé dedans au moyen de portions écrasées radiales (62) respectives qui ont été obtenues sur le premier tube (11) par déformation plastique.

10. Système de retenue selon la revendication 9, **caractérisé en ce que** ladite tige (13) a une extrémité libre écrasée (18) vers la seconde extrémité du premier tube de façon à former une tête de butée (70) pour ledit manchon d'arrêt en acier.

11. Agencement de fixation de type barre (10) pour un système de retenue (1), selon l'une quelconque des revendications précédentes.
